# EUROPEAN PATENT APPLICATION

(11) **EP 4 339 510 A2**
(43) Date of publication of application: **20.03.2024**
(21) Application number: 23192920.9
(22) Date of filing: 23.08.2023
(51) Int. Cl.: F21S 41/20, F21S 41/143, F21S 41/64, F21S 43/14, F21S 43/20, B60Q 3/80

(54) **ADJUSTABLE LIGHTING**

(30) Priority: 19.09.2022 US 202263407946 P; 15.08.2023 US 202318450117
(71) Applicant: Apple Inc., Cupertino, CA 95014 (US)
(72) Inventor: MAZUIR, Clarisse, Cupertino, 95014 (US); COSTA, Paul J., Cupertino, 95014 (US); LYNCH, Stephen B., Cupertino, 95014 (US); STIEHL, Kurt R., Cupertino, 95014 (US); CHILD, Christopher P., Cupertino, 95014 (US); TANG, Xiaofeng, Cupertino, 95014 (US); PORRITT, Christopher L., Cupertino, 95014 (US); WHARTON, Michael C., Cupertino, 95014 (US); MASSCHELEIN, Peter F., Cupertino, 95014 (US); ZURCHER, Mark A., Cupertino, 95014 (US); LI, Xin, Cupertino, 95014 (US); GARRONE, Ryan J., Cupertino, 95014 (US)
(74) Representative: Zacco Denmark A/S

(57) **Abstract**

A system (10) may have a support structure (12) that separates an exterior region from an interior region. The system may include a lighting system with interior and/or exterior lights (16) with adjustable diffusers (30). An interior light may be used as a task light, a cabin light, a sensor indicator light, or a trim light. Adjustments to the adjustable diffusers (30) can be used to adjust the angular spread of emitted light (40) for operation in different lighting modes.

## Description

### Field

This relates generally to systems with lighting, and, more particularly, systems with adjustable lighting.

### Background

Buildings, mobile systems, and other systems may be provided with lighting. The lighting may be adjusted to change brightness levels and other settings.

### Summary

A system may have a vehicle body or other support that separates an exterior region from an interior region. The system may include a lighting system with interior and/or exterior lights having adjustable diffusers. The lights may include light sources such as white and/or colored light-emitting diodes. The adjustable diffusers may be electrically adjustable liquid crystal diffusers.

An exterior light on the vehicle body may be used as a headlight, as a position light, or as another vehicle light. An interior light may be used as a task light, a cabin light, a sensor indicator light, or a trim light. Adjustments to the adjustable diffusers can be used to adjust the angular spread of emitted light for operation in different lighting modes.

### Brief Description of the Drawings

FIG. 1 is a cross-sectional view of an illustrative system in accordance with an embodiment.
FIG. 2 is a cross-sectional side view of an illustrative adjustable diffuser in accordance with an embodiment.
FIG. 3 is cross-sectional side view of an illustrative adjustable light in accordance with an embodiment.
FIGS. 4 and 5 are front and side views of an illustrative adjustable light in accordance with an embodiment.
FIG. 6 is a view of an illustrative light with multiple light emitters and multiple individually adjustable diffusers in accordance with an embodiment.
FIG. 7 is a side view of an illustrative system with an adjustable light in accordance with an embodiment.
FIG. 8 is a side view of an illustrative display with an adjustable viewing angle in accordance with an embodiment.
FIG. 9 is a flow chart of illustrative operations involved in using an adjustable light in a system in accordance with an embodiment.

### Detailed Description

A system may have adjustable lighting. The adjustable lighting may include one or more adjustable lights that operate to provide exterior and/or interior illumination. Adjustable lights may have one or more light-emitting diodes or other light emitters and may have adjustable diffusers. By adjusting the light emitters and diffusers, lighting attributes such as illumination color, illumination brightness, and illumination coverage (e.g., the angular spread of light emission) may be adjusted.

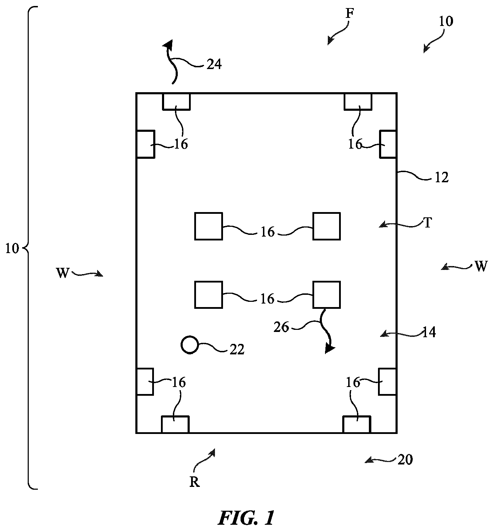

FIG. 1 is a top view of an illustrative system of the type that may include adjustable lights. As shown in FIG. 1, system 10 may include a support structure such as support 12 and one or more adjustable lights 16. Support 12 may separate interior region 14 of system 10 from exterior region 20, which surrounds system 10. System 10 may be a building, a mobile system (e.g., a vehicle), and/or other suitable system. In arrangements in which system 10 is a vehicle, support 12 may be a vehicle body and may contain doors, windows, and/or other vehicle structures.

System 10 may include electrical components 22 in interior region 14 such as sensors, displays, buttons, communications circuitry, control circuitry (e.g., microprocessors, storage, etc.), and/or other electrical and/or optical equipment. In an illustrative arrangement, these components may include sensors such as touch sensors and button sensors that receive user finger press input, microphones that receive user voice command input, and other devices that receive user input. These components may also include ambient light sensors (color and/or monochrome photodetectors) for measuring the brightness of exterior region 20, cameras, and/or other optical sensors.

Support 12 (e.g., a vehicle body) may have portions such as front portion F, rear portion R, side portions W, and roof portion T. Adjustable lights 16 may be coupled to support 12 and supported by support 12.

Adjustable lights 16 may include exterior lights (e.g., lights that emit external light 24 into exterior region 20). Exterior lights may be located on front portion F, rear portion R, side portions W and/or roof portion T and may include headlights on front portion F, taillights on rear portion R, position lights on front portion F and/or rear portion R, and/or other lighting (e.g., lights to provide visibility in fog, lights to provide turn signals, brake lights, backup lights, and/or other vehicle lights).

Adjustable lights 16 may also include interior lights (e.g., lights that emit internal (interior) light 26 into interior region 14. Interior lights may be mounted on front portion F (e.g., as inwardly facing lights on a dashboard, rearview mirror, sun visor, and/or front body pillar), may be mounted on rear portion R (e.g., as inwardly facing lights on a package shelf), may be mounted on side portions W (e.g., as inwardly facing lights on doors and/or side body panels, may be mounted on roof T (e.g., as inwardly facing ceiling lights), and/or may be mounted on other surfaces in interior region 20 (e.g., on the surfaces of seating, arm rests, door panels and/or other body panels, pillars, dashboard surfaces, etc.). Interior lighting may serve as task lighting, cabin (flood) lighting, trim lighting, indicator lights (e.g., sensor location lighting), and/or other lighting.

To adjust the output of lights 16, lights 16 may be provided with adjustable components such as electrically adjustable light emitters. The electrically adjustable light emitters may be adjusted to change attributes of lights 16 such as illumination brightness, illumination color, illumination timing patterns (e.g., fast blinking, slow blinking, continuous illumination), and/or other illumination attributes. The electrically adjustable light emitters may include one or more light-emitting diodes, lamps, lasers, electroluminescent light sources, and/or other light emitters. The light emitters may be white light emitters such as white light-emitting diodes and/or may be colored light emitters such as colored light-emitting diodes that emit non-white illumination (e.g., red light-emitting diodes, green light-emitting diodes, blue light-emitting diodes, yellow light-emitting diodes, and other colored light-emitting diodes that can be adjusted independently to change the relative proportion of each of multiple different colors that is emitted and thereby adjust the overall color of emitted light). Illustrative configurations in which each light 16 includes a light source formed from one or more light emitters such as one or more white and/or colored light-emitting diodes may sometimes be described herein as an example. In general, lights 16 may include any suitable sources of light.

Lights 16 may also be provided with adjustable diffusers. A light may, for example, have an adjustable diffuser that overlaps a light source with one or more light-emitting diodes. The diffusers may be, for example, adjustable haze layers or blocks of adjustable haze material that can be electrically adjusted to exhibit a desired amount of haze (e.g., a desired amount of light scattering, sometimes referred to as an adjustable amount of light diffusion). Haze (transmission haze) may be defined as the amount of light that is subject to wide angle scattering (e.g., at an angle greater than 2.5° from normal per the ASTM D1003 standard of ASTM International, formerly known as the American Society for Testing and Materials). In some embodiments, an adjustable diffuser in a light may be adjusted between a low-haze state (sometimes referred to as a clear state) and a high-haze state. The low-haze state may, for example, exhibit less than 3% haze, less than 2% haze, or less than 1% haze (as examples). The high-haze state may, for example, exhibit at least 90% haze, at least 95% haze, or at least 98% haze (as examples). In some configurations, lower and higher haze states may be characterized by other haze values. For example, a lower haze state may correspond to a haze of less than 50%, less than 25% or less than 15% and a higher haze state may correspond to a haze of more than 50%, more than 65%, more than 75%, or more than 85% (as examples). If desired, the amount of haze produced by each adjustable diffuser may be continuously adjusted between a low-haze value and a high-haze value (e.g., so that one or more intermediate levels of light scattering may be produced).

When the adjustable diffuser in a light 16 is adjusted to exhibit low haze, light may be emitted with a first angular spread. When the adjustable diffuser in the light is adjusted to increase its haze, the emitted light will be scattered (diffused) by the adjustable diffuser and will exhibit a second angular spread that is larger than the first angular spread. Adjustments to the adjustable diffuser may be made based on an ambient light level measured with an ambient light sensor (e.g., an ambient light sensor output indicating whether it is day or night), may be made based on user input measured with a user input sensor, and/or may be made based on other criteria (e.g., other sensor output). Examples in which diffuser adjustments are made based on ambient light sensor measurements and/or other sensor measurements may sometimes be described herein as an example.

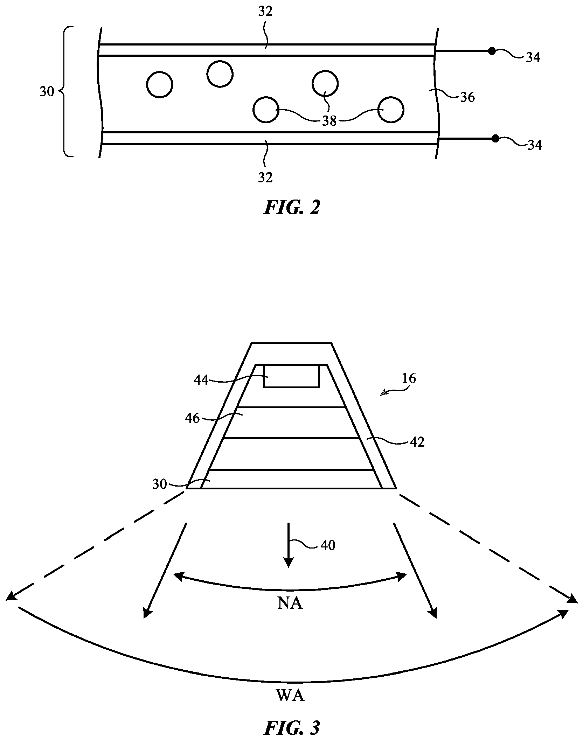

FIG. 2 is a cross-sectional side view of an illustrative adjustable diffuser. Adjustable diffuser 30 of FIG. 2 is an adjustable liquid crystal diffuser. As shown in FIG. 2, diffuser 30 may have a polymer matrix such as polymer layer 36 with openings filled with liquid crystal material 38. The openings may include discrete voids (e.g., hollow spheres) filled with bubbles of liquid crystal material (e.g., diffuser 30 may be a polymer dispersed liquid crystal diffuser) or may form an interconnected pattern of voids in the polymer matrix (e.g., diffuser may be a polymer network liquid crystal diffuser). The polymer matrix may be sandwiched between opposing transparent electrodes such as electrodes 32 (e.g., electrodes formed from indium tin oxide or other transparent conductive material). Terminals 34 may be used to receive a control voltage (e.g., a control voltage produced based on an ambient light reading from an ambient light sensor, etc.). By adjusting the voltage across terminals 34, the electric field strength applied to liquid crystal material 38 may be adjusted, thereby rotating the liquid crystals in material 38. The rotation of the liquid crystals changes the refractive index of liquid crystal material 38 relative to the refractive index of the polymer layer 36 and thereby adjusts the haze of diffuser 30. When the refractive index values of the liquid crystal material and polymer are closely matched, haze will be low (e.g., diffuser 30 may be clear). When the refractive index values of the liquid crystal material and polymer are dissimilar, haze will be higher (e.g., diffuser 30 may exhibit significant haze and may appear hazy). In illustrative diffuser 30 of FIG. 2, the polymer matrix has the shape of a film (e.g., the polymer matrix forms polymer layer 36). If desired, the polymer matrix may have the shape of a solid block of material (e.g., a rectangular box shape, a hemispherical shape, a slab with planar and/or curved surfaces, and/or other suitable matrix shape. The example of FIG. 2 is illustrative.

FIG. 3 is a cross-sectional side view of an illustrative adjustable light. As shown in FIG. 3, light 16 may have a support such as support 42. Support 42 may be formed from one or more pieces of polymer, glass, metal, ceramic, other materials, and/or combinations of these materials and may be coupled to and supported by an exterior portion or interior portion of system support 12. Support 42 may have reflective structures forming a back reflector, walls forming a cavity into which light emitters and/or other components may be mounted, and/or other adjustable light support structures. Light source 44 may be coupled to support 42. Light source 44 may include one or more light emitters such as one or more light-emitting diodes. Adjustable diffuser 30, which may sometimes be referred to as an electrically adjustable liquid crystal light diffuser or adjustable light diffuser, may be coupled to support 42 in alignment with light source 44 (e.g., diffuser 30 may overlap light source 44 so that light that is emitted from light source 44 passes through diffuser 30 before being emitted from light 16). If desired, light 16 may include optional light conditioning optics 46. Optics 46 may, for example, include one or more lenses, reflectors, light filters, fixed diffusers, prisms, shutters with electrically adjustable actuators to selectively block different selected portions of emitted light from light source 44, and/or other optical components. If desired, these components may be interposed between light source 44 and diffuser 30 (e.g., to help condition and control emitted light from light source 44 so that, for example, the emitted light has a desired angular spread).

During operation of light 16, attributes of light 16 such as output light intensity (sometimes referred to as illumination intensity), output light color (sometimes referred to as illumination color), and/or output light temporal characteristics (e.g., the time-dependent characteristics of emitted illumination such as whether the illumination is continuous, is flashing, blinks with a particular pattern, etc.) may be adjusted. Diffuser 30 may also be adjusted. When diffuser 30 has lower haze (e.g., when diffuser 30 is in its clear state), an external viewer may view the interior of light 16 and its components. For example, in an arrangement in which light source 44 has an array of five light-emitting diodes, the light output from each of the light-emitting diodes may be separately distinguished and the location of each of the light-emitting diodes may therefore be discerned (e.g., as pinpoints of light). The light 40 that is emitted from the light-emitting diodes when diffuser 30 is clear may have a first angular spread such as illustrative angular spread NA of FIG. 3. When diffuser 30 is placed in a hazy state, light 40 will be diffused while passing through diffuser 30 and may have a second angular spread that is greater than the first angular spread such as angular spread WA of FIG. 3.

As this example demonstrates, adjustment of the haze level of diffuser 30 may be used to adjust the angular spread of emitted light 40 from light 16. When, as an example, light 16 is being used as an interior light in system 10 (e.g., when light 16 is mounted to an interior surface of support 12 such as an interior surface of roof T or other portion of support 12), diffuser 30 may be placed in a clear state to allow light 16 to provide directional (narrow angle) illumination suitable for task lighting (e.g., so that light 16 serves as a task light that supplies task illumination to illuminate a book for reading) and may be placed in a hazy state to allow light 16 to provide dispersed illumination suitable for cabin lighting (e.g., so that light 16 serves as a cabin light that supplies cabin illumination to illuminate a sizable portion of interior region 14). As another example, an interior light may be angled towards the seat of a vehicle occupant. When diffuser 30 is clear, light from the interior light may illuminate reading material in the occupant's lap. When diffuser 30 is hazy, part of the emitted light from the interior light will be scattered towards the user's face (e.g., to provide illumination for a video call). In a further example, light 16 may have an elongated shape or other suitable shape that allows light 16 to serve as interior trim lighting. Diffuser 30 in the trim lighting may be used to adjust the appearance of emitted trim illumination. Adjustment to diffuser 30 may also be made for exterior lights.

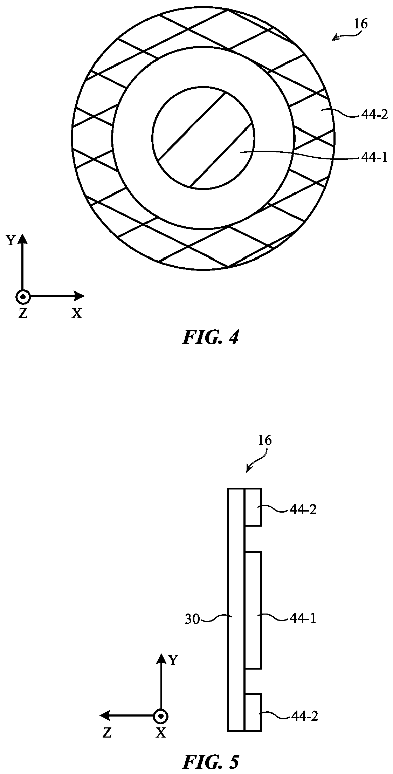

FIGS. 4 and 5 are front and side views, respectively, of an illustrative adjustable light 16 mounted to an exterior portion of support 12. As shown in FIG. 4, light 16 may have a light source with a first portion such as central portion 44-1 that has a circular shape and a second portion such as peripheral portion 44-2 that has a ring shape or other shape surrounding the first portion. Portions 44-1 and 44-2 may be concentric and may be separated by a ring-shaped gap (as an example). As shown in the side view of FIG. 5, adjustable diffuser 30 may overlap the light source formed by portions 44-1 and 44-2.

In an illustrative configuration, light 16 of FIGS. 4 and 5 may be mounted on front portion F of system 12 (e.g., the front of a vehicle) and may be used as an adjustable headlight. During daytime conditions (e.g., when ambient light levels are measured by an ambient light detector in system 10 as exceeding a predetermined threshold), diffuser 30 may be placed in its hazy state. In this state, portions 44-1 and 44-2 may both emit light that is diffused by diffuser 30. This diffuse emitted light may serve as daytime running light illumination (e.g., light 16 may serve as a daytime running light). Because diffuser 30 is hazy, the light from portions 44-1 and 44-2 mix so that the light-emitting diodes of both of portions 44-1 and 44-2 can contribute to the overall amount of daytime running light illumination that is provided. During nighttime conditions (e.g., when the amount of ambient light detected by the ambient light detector falls below the predetermined threshold and is therefore lower than during daytime conditions), diffuser 30 may be placed in its clear state. In the clear state, portion 44-2 may serve as a position light (parking light) and may emit position light illumination. Portion 44-1 may serve as a headlight and may provide headlight illumination. If desired, portion 44-1 may include a movable shutter to adjust the output light pattern from portion 44-1 between a low beam pattern and a high beam pattern and/or may have independently controlled low-beam and high-beam light-emitting diodes. Because diffuser 30 is clear, the intensity of the light that is emitted in the forward direction (the +Z direction of FIG. 5) is not attenuated due to off-axis scattering in diffuser 30, which may help to enhance efficiency.

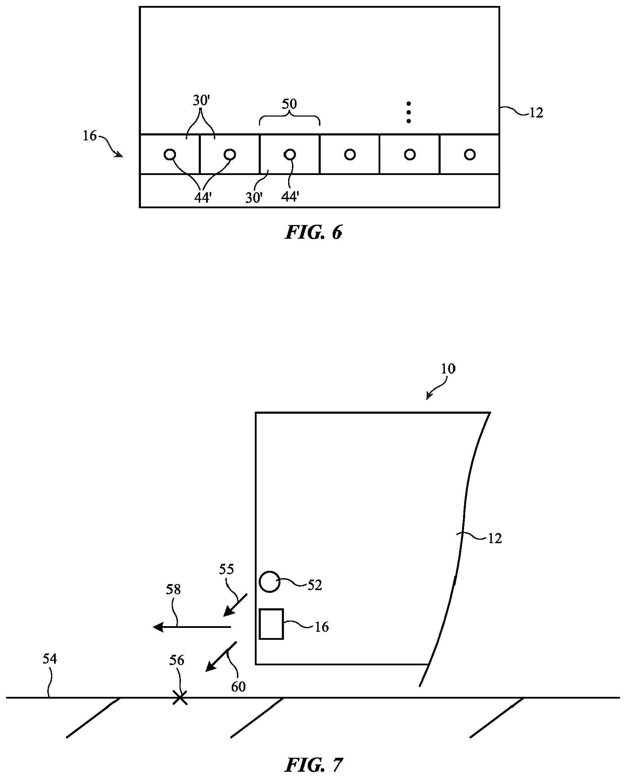

If desired, light 16 may have a multisector diffuser. As shown in FIG. 6, for example, light 16 may have a series of sections each of which has an individually adjustable light source portion 44' and an independently adjustable diffuser portion 30'. Light source portions 44' may sometimes be referred to as light sources or light-emitting diodes. Adjustable diffuser portions 30' may sometimes be referred to as diffuser sectors, regions, or segments. Each diffuser portion 30' may be aligned with an overlap a respective light source portion 44'. There may be a one-to-one correspondence between light source portions 44' and diffuser portions 30' or there may be more or fewer light source portions 44' than diffuser portions 30'. Light 16 may have a one-dimensional array of portions 44' and 30' (e.g., light 16 may form an elongated strip) or light 16 may have other shapes (e.g., a rectangular shape, a circular shape, other two-dimensional shapes, etc.). Light 16 may be mounted on an interior portion of support 12 (e.g., on one or more portions of a vehicle body such as one or more door panels, pillars, seats, arm rests, roofs (headliners), window frames, etc. or may be mounted on an exterior portion of support 12. As an example, light 16 may form a decorative trim that is mounted to a door (e.g., a door interior) or other interior portion of support 12.

When mounted to the interior of a vehicle door or other interior portion of a vehicle body, diffuser portions 30' may all be placed in a clear state (so that individual light source portions 44' may be distinguishable and may appear as separate pinpoints of light) or may all be placed in a hazy state (e.g., so that light 16 forms an uninterrupted diffuse light strip). Arrangements in which various subsets of light source portions 44' emit light and/or in which various subsets of diffuser portions 30' are adjusted to desired haze levels may also be used. This allows the appearance of light 16 to be adjusted (e.g., to create trim illumination with a desired pattern, color, angular spread, etc.). In yet another mode of operation, light source portions 44' may be illuminated to indicate the presence of an available vehicle control sensor (e.g., so that light 16 serves as a sensor indicator light). For example, a single light source portion 44' that that is aligned with a touch sensor and that overlaps the touch sensor may be illuminated. The touch sensor (e.g., touch sensor 50 of FIG. 6) may serve as a door open/close button (e.g., a touch sensor that is touched to direct a door opening and closing actuator to open or close a door in system 10 on which light 16 or part of light 16 is mounted). A corresponding diffuser portion 30' that overlaps the single illuminated light source portion 44' may be placed in a desired state (e.g., clear or hazy) to provide the illuminated light source portion 44' with a desired appearance. In this configuration, the illuminated light source portion 44' may be used to indicate the presence and availability of the door touch sensor (door open-close sensor). Other patterns of undiffused and/or diffused light may be emitted if desired (e.g., light source portions 44' may be independently controlled to adjust emitted intensity, color, timing, etc. while diffuser portions 30' are independently controlled to adjust each portion 30' to produce a corresponding desired amount of light diffusion for that part of light 16).

Another illustrative configuration for adjustable light 16 is shown in FIG. 7. In the example of FIG. 7, light 16 is an exterior light on an exterior of support 12 (e.g., the front, rear, or side exterior portion of a vehicle body). Sensor 52, which may be an optical sensor such as a camera, may gather images in direction 55. For example, sensor 52 may be used to capture images to detect objects such as obstruction 56 on roadway 54. When a touch sensor or other user input sensor detects that system 10 (e.g., a vehicle) has been started or directed to commence driving (e.g., when a vehicle is initially started up or commanded to begin driving), light 16 may be activated and diffuser 30 of light 16 may be placed in a hazy state. In this state, diffuser 30 scatters emitted light from light 16 downwards in direction 60 to illuminate the image being captured by sensor 52 (e.g., to illuminate obstruction 56 and roadway 54). In this way, sensor 52 may capture satisfactory images of obstruction 56 and roadway 54 (e.g., so that driving may be paused or halted whenever an obstruction is detected). After checking for the presence of obstructions, the adjustable diffuser in light 16 may be placed in a clear state, so that light from light 16 may be emitted over a narrower angular spread in direction 58 to serve as headlight illumination. As this example demonstrates, the external light may be operated in a first mode in which diffuse supplemental illumination is provided for sensor 52 and a second mode in which more directional headlight illumination (or other vehicle illumination) is provided. Light 16 may switch between these two modes in response to sensor output (e.g., output from a user input sensor, output from a vehicle sensor, and/or other sensor output in system 10).

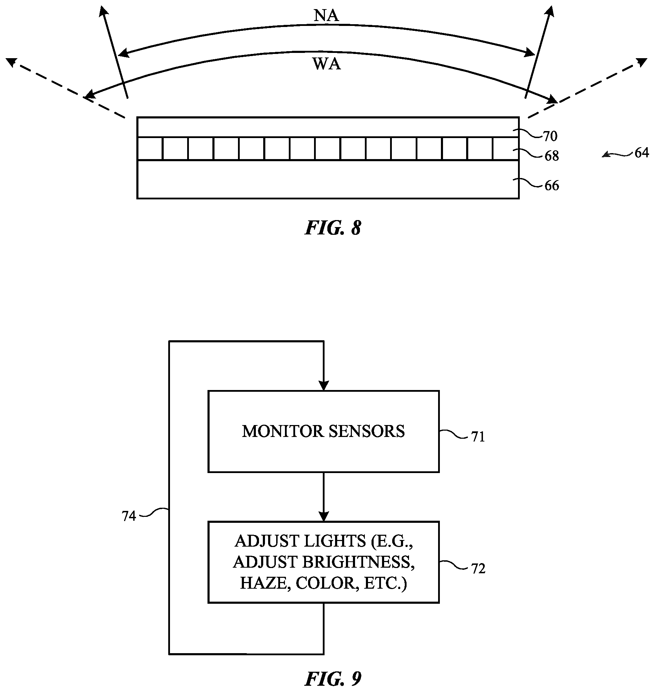

FIG. 8 is a cross-sectional side view of an illustrative adjustable angle-of-view display for system 10 or other systems that includes an adjustable diffuser (e.g., an adjustable liquid crystal diffuser of the type described in connection with diffuser 30 of light 16). Display 64 may have an array of pixels 68 on a substrate such as substrate 66. Pixels 68 may be liquid crystal display pixels, light-emitting diode pixels, and/or other pixels. The array of pixels 68 may be used to display images through diffuser 70. Diffuser 70 may be adjustable and can therefore switch between first and second states with different amounts of haze. For example, diffuser 70 may be adjustable between clear and hazy states. In the clear state, the angle-of-view of display 64 may be determined by the native angular spread of pixels 68 (see, e.g., first angle-of-view NA of FIG. 8). In the hazy state, diffuser 70 scatters light being emitted by pixels 68, so that display 64 exhibits a second angle-of-view WA that is wider than the first angle-of-view). A user input sensor such as a touch sensor, button sensor, voice sensor, and/or other sensor may be used to gather user input that is used in determining which of these two states to place diffuser 70. In response to sensor output indicating that a private viewing mode is desired, diffuser 70 may become clear, thereby narrowing the angle of view over which the image on display 64 may be viewed (e.g., to an angle that is sufficiently narrow that people sitting next to a central viewer in front of display 64 may not view any content on display 64). In response to sensor output indicating that a public viewing mode is desired, diffuser 70 may enter its hazy state, thereby widening the angle of view over which the image on display 64 may be viewed (e.g., to an angle sufficiently wide to allow multiple adjacent viewers to view images on display 64).

FIG. 9 is a flow chart of illustrative operations involved in using adjustable lights 16 in system 10.

During the operations of block 71, a touch sensor, button sensor, voice sensor (e.g., a microphone), and/or other user input sensor may be monitored to gather user input and/or other sensors such as ambient light sensors may be used in measuring ambient light levels and/or gathering other environmental sensor readings.

During the operations of block 72, lights 16 may be adjusted based on the output of one or more of the sensors monitored during the operations of block 71. Attributes of lights 16 that may be adjusted include output intensity, output color, illumination timing (e.g., whether illumination is continuous or pulsed, etc.) and output light angular spread. Light sources 44 may be adjusted to control which light-emitting diode(s) or other light emitters are activated and how strongly they are turned on. Adjustable diffusers 30 may be adjusted to control the amount of light diffusion associated with the diffusers and therefore the angular spread of light from the light sources that passes through the diffusers.

As shown by line 74, the operations of FIG. 9 may be performed repeatedly during operation of system 10.

In accordance with an embodiment, a lighting system is provided that includes a light source configured to emit light, an ambient light sensor and an adjustable diffuser configured to diffuse the emitted light by an amount based on output from the ambient light sensor.

In accordance with another embodiment, the adjustable diffuser is adjustable between a clear state and a hazy state and the adjustable diffuser is configured to operate in the clear state in response to detection of a first ambient light level and is configured to operate in the hazy state in response to detection of a second ambient light level that is greater than the first ambient light level.

In accordance with another embodiment, the light source and the adjustable diffuser are configured to form a vehicle light.

In accordance with another embodiment, the light source includes independently adjustable first and second portions and the adjustable diffuser overlaps the first and second portions.

In accordance with another embodiment, the first portion includes a first light-emitting diode and the second portion includes a second light-emitting diode.

In accordance with another embodiment, the first portion is configured to emit headlight illumination when the adjustable diffuser is in the clear state.

In accordance with another embodiment, the first and second portions are configured to emit daytime running light illumination when the adjustable diffuser is in the hazy state.

In accordance with another embodiment, the second portion is configured to emit position light illumination when the adjustable diffuser is in the clear state.

In accordance with another embodiment, the second portion surrounds the first portion.

In accordance with another embodiment, the adjustable diffuser includes an electrically adjustable liquid crystal diffuser.

In accordance with an embodiment, a vehicle is provided that includes a vehicle body, a light source coupled to the vehicle body and an adjustable diffuser that overlaps the light source, the adjustable diffuser is configured to switch between a clear state and in a hazy state.

In accordance with another embodiment, the vehicle includes a camera configured to capture an image of an exterior region surrounding the vehicle body, the adjustable diffuser is configured to scatter emitted light from the light source to serve as illumination for the image when the adjustable diffuser is switched to the hazy state.

In accordance with another embodiment, the light source includes a plurality of independently adjustable light source portions overlapped by respective independently adjustable diffuser portions of the adjustable diffuser.

In accordance with another embodiment, the vehicle includes a sensor aligned with one of the adjustable diffuser portions and one of the adjustable light source portions.

In accordance with another embodiment, the sensor includes a door open-close sensor.

In accordance with another embodiment, the vehicle body has an interior region and the light source and the adjustable diffuser are configured to emit trim illumination in the interior region.

In accordance with another embodiment, the vehicle body has an interior region and the light source is configured to emit light through the adjustable diffuser into the interior region, when the adjustable diffuser is in the clear state, the emitted light serves as task lighting, and when the adjustable diffuser is in the hazy state, the emitted light serves as cabin lighting.

In accordance with another embodiment, the light source includes light-emitting diodes of different colors.

In accordance with another embodiment, the adjustable diffuser includes an electrically adjustable liquid crystal diffuser.

In accordance with an embodiment, a vehicle is provided that includes a vehicle body enclosing an interior region and surrounded by an exterior region, an exterior light with an adjustable diffuser that is configured to emit light into the exterior region and an interior light with an adjustable diffuser that is configured to emit light into the interior region.

The foregoing is merely illustrative and various modifications can be made to the described embodiments. The foregoing embodiments may be implemented individually or in any combination.

Exemplary systems and vehicles are set out in the following items.
1. A lighting system, comprising:
   a light source configured to emit light;
   an ambient light sensor; and
   an adjustable diffuser configured to diffuse the emitted light by an amount based on output from the ambient light sensor.
2. The lighting system defined in item 1 wherein the adjustable diffuser is adjustable between a clear state and a hazy state and wherein the adjustable diffuser is configured to operate in the clear state in response to detection of a first ambient light level and is configured to operate in the hazy state in response to detection of a second ambient light level that is greater than the first ambient light level.
3. The lighting system defined in item 2 wherein the light source and the adjustable diffuser are configured to form a vehicle light.
4. The lighting system defined in item 3 wherein the light source comprises independently adjustable first and second portions and wherein the adjustable diffuser overlaps the first and second portions.
5. The lighting system defined in item 4 wherein the first portion comprises a first light-emitting diode and the second portion comprises a second light-emitting diode.
6. The lighting system defined in item 5 wherein the first portion is configured to emit headlight illumination when the adjustable diffuser is in the clear state.
7. The lighting system defined in item 6 wherein the first and second portions are configured to emit daytime running light illumination when the adjustable diffuser is in the hazy state.
8. The lighting system defined in item 7 wherein the second portion is configured to emit position light illumination when the adjustable diffuser is in the clear state.
9. The lighting system defined in item 8 wherein the second portion surrounds the first portion.
10. The lighting system defined in item 1 wherein the adjustable diffuser comprises an electrically adjustable liquid crystal diffuser.
11. A vehicle, comprising:
   a vehicle body;
   a light source coupled to the vehicle body; and
   an adjustable diffuser that overlaps the light source, wherein the adjustable diffuser is configured to switch between a clear state and in a hazy state.
12. The vehicle defined in item 11 further comprising a camera configured to capture an image of an exterior region surrounding the vehicle body, wherein the adjustable diffuser is configured to scatter emitted light from the light source to serve as illumination for the image when the adjustable diffuser is switched to the hazy state.
13. The vehicle defined in item 11 wherein the light source comprises a plurality of independently adjustable light source portions overlapped by respective independently adjustable diffuser portions of the adjustable diffuser, the vehicle further comprising a sensor aligned with one of the adjustable diffuser portions and one of the adjustable light source portions, wherein the sensor comprises a door open-close sensor, wherein the vehicle body has an interior region, and wherein the light source and the adjustable diffuser are configured to emit trim illumination in the interior region.
14. The vehicle defined in item 11 wherein the vehicle body has an interior region , wherein the light source is configured to emit light through the adjustable diffuser into the interior region, wherein when the adjustable diffuser is in the clear state, the emitted light serves as task lighting, wherein when the adjustable diffuser is in the hazy state, the emitted light serves as cabin lighting, and wherein the light source comprises light-emitting diodes of different colors.
15. The vehicle defined in item 11 wherein the adjustable diffuser comprises an electrically adjustable liquid crystal diffuser.
16. A vehicle, comprising:
   a vehicle body enclosing an interior region and surrounded by an exterior region;
   an exterior light with an adjustable diffuser that is configured to emit light into the exterior region; and
   an interior light with an adjustable diffuser that is configured to emit light into the interior region.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated

## Claims

1. A lighting system, comprising:
a light source configured to emit light;
an ambient light sensor; and
an adjustable diffuser configured to diffuse the emitted light by an amount based on output from the ambient light sensor.

2. The lighting system defined in claim 1 wherein the adjustable diffuser is adjustable between a clear state and a hazy state and wherein the adjustable diffuser is configured to operate in the clear state in response to detection of a first ambient light level and is configured to operate in the hazy state in response to detection of a second ambient light level that is greater than the first ambient light level.

3. The lighting system defined in claim 2 wherein the light source and the adjustable diffuser are configured to form a vehicle light.

4. The lighting system defined in claim 3 wherein the light source comprises independently adjustable first and second portions and wherein the adjustable diffuser overlaps the first and second portions.

5. The lighting system defined in claim 4 wherein the first portion comprises a first light-emitting diode and the second portion comprises a second light-emitting diode.

6. The lighting system defined in claim 5 wherein the first portion is configured to emit headlight illumination when the adjustable diffuser is in the clear state.

7. The lighting system defined in claim 6 wherein the first and second portions are configured to emit daytime running light illumination when the adjustable diffuser is in the hazy state.

8. The lighting system defined in claim 7 wherein the second portion is configured to emit position light illumination when the adjustable diffuser is in the clear state.

9. The lighting system defined in claim 8 wherein the second portion surrounds the first portion.

10. The lighting system defined in claim 1 wherein the adjustable diffuser comprises an electrically adjustable liquid crystal diffuser.

11. A vehicle, comprising:
a vehicle body;
a light source coupled to the vehicle body; and
an adjustable diffuser that overlaps the light source, wherein the adjustable diffuser is configured to switch between a clear state and in a hazy state.

12. The vehicle defined in claim 11 further comprising a camera configured to capture an image of an exterior region surrounding the vehicle body, wherein the adjustable diffuser is configured to scatter emitted light from the light source to serve as illumination for the image when the adjustable diffuser is switched to the hazy state.

13. The vehicle defined in claim 11 wherein the light source comprises a plurality of independently adjustable light source portions overlapped by respective independently adjustable diffuser portions of the adjustable diffuser, the vehicle further comprising a sensor aligned with one of the adjustable diffuser portions and one of the adjustable light source portions, wherein the sensor comprises a door open-close sensor, wherein the vehicle body has an interior region, and wherein the light source and the adjustable diffuser are configured to emit trim illumination in the interior region.

14. The vehicle defined in claim 11 wherein the vehicle body has an interior region , wherein the light source is configured to emit light through the adjustable diffuser into the interior region, wherein when the adjustable diffuser is in the clear state, the emitted light serves as task lighting, wherein when the adjustable diffuser is in the hazy state, the emitted light serves as cabin lighting, and wherein the light source comprises light-emitting diodes of different colors.

15. The vehicle defined in claim 11 wherein the adjustable diffuser comprises an electrically adjustable liquid crystal diffuser.
